# EUROPÄISCHE PATENTSCHRIFT

(11) **EP 2 478 578 B1**
(45) Veröffentlichungstag und Bekanntmachung des Hinweises auf die Patenterteilung: **22.01.2014**
(21) Anmeldenummer: 10751571.0
(22) Anmeldetag: 27.08.2010
(51) Int. Cl.: H01M 2/16, H01M 10/42, H01M 4/505, H01M 4/525, H01M 4/58

(54) **ELEKTROCHEMISCHER ENERGIESPEICHER MIT EINEM BEHÄLTER**
ELECTROCHEMICAL ENERGY STORE DEVICE COMPRISING A CONTAINER
BATTERIE ÉLECTROCHIMIQUE COMPRENANT UN BOîTIER

(30) Priorität: 14.09.2009 DE 102009041508
(43) Veröffentlichungstag der Anmeldung: 25.07.2012
(73) Patentinhaber: Li-Tec Battery GmbH, 01917 Kamenz (DE)
(72) Erfinder: SCHAEFER, Tim, 99768 Harztor (DE); GUTSCH, Andreas, 59348 Luedinghausen (DE)
(74) Vertreter: Wallinger, Michael
(86) Internationale Anmeldenummer: PCT/EP2010/005288
(87) Internationale Veröffentlichungsnummer: WO 2011/029533

(56) Entgegenhaltungen:
- WO-A1-2004/021475
- WO-A1-2004/021476
- US-A1- 2008 254 343

## Beschreibung

Die vorliegende Erfindung betrifft einen elektrochemischen Energiespeicher, insbesondere einen auf der Grundlage von Lithium-Ionen arbeitenden elektrochemischen Energiespeicher.

Für den kommerziellen Einsatz elektrochemischer Energiespeicher sind neben anderen Faktoren auch deren möglichst einfache, kostengünstige Konstruktionsweise und eine größtmögliche Sicherheit beim Umgang mit solchen Energiespeichern entscheidend. Zu einer Gefährdung der Sicherheit kommt es im Zusammenhang mit elektrochemischen Energiespeichern vor allem dann, wenn die darin enthaltenen galvanischen Zellen durch eine starke Wärmeentwicklung überhitzen oder eine solche Überhitzung droht. Eine starke Wärmeentwicklung kann beispielsweise die Folge von internen oder externen Kurzschlüssen, Reaktionen beim Überladen, bei einer Überlastung, des Einflusses externer Wärmequellen, einem Laden mit hohem Strom, einem Laden mit hohem Ladefaktor, einem Ladebeginn bei bereits hoher Temperatur und schlechter Kühlung sein.

Durch die Temperaturerhöhung erhitzt sich der Elektrolyt innerhalb einer Zelle, bis er unter Umständen schließlich verdampft. Eine daraus resultierende Ansammlung von Elektrolytdampf innerhalb einer gasdicht versiegelten Zelle führt häufig zu einem ansteigenden Innendruck. Überschreitet der Innendruck einen Grenzwert, kann es zur Explosion der Zelle kommen, wobei für den Menschen schädliche Zellinhaltsstoffe austreten können oder ein Feuer entfacht werden kann.

Es sind Sicherheitseinrichtungen für elektrochemische Energiespeicher bekannt, welche einer übermäßigen Gasansammlung innerhalb einer gasdicht versiegelten Zelle und/oder eines Zellenstapels entgegenwirken, indem sie entstehenden Gasen ermöglichen, zu entweichen, wenn der Innendruck der Zelle einen vorbestimmten Schwellwert überschreitet. Einige aus dem Stand der Technik bekannte Sicherheitseinrichtungen weisen Ventile auf, die einen Druckausgleich ermöglichen. Ein derartiger Vorschlag findet sich beispielsweise in der Patentschrift US 5,523,178, in der ein Ventil für eine galvanische Zelle beschrieben ist. Die Realisierung derartiger Ventile stößt in der Praxis jedoch häufig auf Schwierigkeiten. Aufgrund der hohen Komplexität des Ventil-Designs steigen der Produktionsaufwand und damit auch die Kosten bei der Herstellung einer Zelle. Weniger komplex gestaltete Ventile haben den Nachteil, dass sie nur bei hohem Druck, oder nur in einem schmalen Druckbereich öffnen.

Die WO 2004/021475 A1 offenbart Separator-Elektroden-Einheiten für Lithium-Batterien sowie ein Verfahren zu deren Herstellung. Beschrieben wird insbesondere eine poröse Elektrode und eine auf diese Elektrode aufgebrachte anorganische Separatorschicht aus Metalloxidpartikeln mit einer mittleren Partikelgröße, die kleiner ist als die Poren der porösen Elektrode.

Die WO 2004/021476 A1 beschreibt Separatoren für den Einsatz in Lithium-Hochenergiebatterien sowie ein Verfahren zu deren Herstellung. Diese Druckschrift stellt sich die Aufgabe, Separatoren mit einem besonders geringem Gewicht, insbesondere von weniger als 50 g pro qm und einer Dicke von weniger als 35 m zur Verfügung zu stellen. Dazu offenbart diese Offenlegungsschrift das Aufbringen einer keramischen Beschichtung auf ein Polymerflies, welches eine Dicke von weniger als 30 m aufweist. Als "partikuläre porenbildende Komponente" werden hierbei pyrogene Oxide der Elemente Aluminium, Silizium und/oder Zirkonium eingesetzt.

Die US 2008/0254343 A1 beschreibt eine elektrochemische Zelle mit einem stromunterbrechenden Schalter als interne Komponente der Zelle, wobei der Schalter thermisch gesteuert wird und den Strompfad innerhalb der Zelle unterbricht und hierdurch den Stromfluss unterbindet, sobald die Temperatur innerhalb der Zelle oberhalb einer Aktivierungstemperatur liegt.

Eine weitere aus der Patentanmeldung US 2006/0019150 A1 bekannte Sicherheitseinrichtung sieht vor, das Gehäuse einer Zelle oder eines Zellenstapels mit Sollbruchstellen zu versehen, welche bei einem vorbestimmten Innendruck nachgeben, um entstehendem Dampf eine Abzugsmöglichkeit zu bieten. Einige solcher Sollbruchstellen sind derart ausgestaltet, dass sie beim Auseinanderbrechen die elektrische Leitung zwischen den gleichartig polarisierten Elektroden einer Zelle und den entsprechenden Stromableitern der Baugruppe unterbrechen.

Aus der DE 10 2008 006 026 A1 ist eine Sicherheitseinrichtung für nach galvanischen Prinzipien arbeitende elektrische Einrichtungen bekannt mit einem kontrollierten Überführen solcher Einrichtungen von einem ersten Betriebszustand in einen zweiten Betriebszustand, in dem die Funktionalität und insbesondere das Reaktionspotenzial der Einrichtung reduziert oder vollständig beseitigt ist.

Wegen der verschiedenen Nachteile oder Beschränkungen, die mit derartigen Sicherheitseinrichtungen für galvanische Zellen verbunden sind, liegt der vorliegenden Erfindung die Aufgabe zugrunde, einen hermetisch abdichtbaren elektrochemischen Energiespeicher anzugeben, der ohne derartige Sicherheitseinrichtungen wie beispielsweise Ventile, Sollbruchstellen oder Berstscheiben auskommen kann.

Diese Aufgabe wird durch einen elektrochemischen Energiespeicher oder durch ein Verfahren zur Herstellung eines elektrochemischen Energiespeichers nach einem der unabhängigen Patentansprüche gelöst.

Erfindungsgemäß ist ein elektrochemischer Energiespeicher mit elektrochemisch aktiven Bestandteilen vorgesehen, die im Inneren eines Behälters angeordnet sind. Diese elektrochemisch aktiven Bestandteile oder weitere in dem Behälter angeordnete Bestandteile sind derart ausgestaltet oder angeordnet, dass sie den Ablauf wenigstens einer chemischen Reaktion wenigstens eines Teils der elektrochemisch aktiven Bestandteile des Energiespeichers hemmen, sobald sich im Inneren des Behälters als Folge dieser chemischen Reaktion ein Überdruck aufbaut oder aufbauen könnte.

Im Zusammenhang mit der vorliegenden Erfindung ist unter einem elektrochemischen Energiespeicher jede Einrichtung zu verstehen, die chemische Energien unmittelbar in elektrische Energien umwandeln und einer Anwendung zuführen kann. Unter diesen Begriff fallen also insbesondere galvanische Zellen oder Aggregate aus mehreren galvanischen Zellen, aber auch beispielsweise Brennstoffzellen und andere Einrichtungen zur Umwandlung chemischer Energie in elektrische Energie. Zu den elektrochemischen Speichern im Sinne der vorliegenden Erfindung gehören insbesondere wiederaufladbare elektrochemische Energiespeicher, deren elektrische Energie zugeführt werden kann, die in den elektrochemischen Energiespeicher dann als chemische Energie gespeichert wird. Wichtige Beispiele für solche elektrochemischen Energiespeicher sind wiederaufladbare galvanische Zellen oder Aggregate aus mehreren solcher Zellen.

Im Zusammenhang mit der vorliegenden Erfindung ist unter einem Behälter eines elektrochemischen Energiespeichers jede Art von Behälter, Gehäuse oder Verpackung zu verstehen, die geeignet ist, die elektrochemisch aktiven Bestandteile und andere Bestandteile, welche die elektrochemisch aktiven Bestandteile konstruktiv oder aufgrund ihrer Wirkung vor äußeren Einflüssen zu schützen. Insbesondere kann es sich hierbei um starre oder flexible Gehäuse oder Folienverpackungen, insbesondere um mehrschichtige Folienverpackungen handeln, in welche beispielsweise die Elektrodenstapel und die die Elektroden trennenden Separatoren zusammen mit dem Elektrolyten und den elektrischen Ableitern der galvanischen Zelle eingepackt sind.

Im Zusammenhang mit der vorliegenden Erfindung ist unter einem (elektrochemisch) aktiven Bestandteil eines elektrochemischen Energiespeichers jeder Bestandteil eines solchen Energiespeichers zu verstehen, der an den elektrochemischen Prozessen, die der Energiespeicherung in dem Energiespeicher zugrunde liegen, in irgend einer Weise teilnehmen, oder diese Prozesse unterstützt. Unter diesem Begriff sind also insbesondere die Elektroden und der so genannte Elektrolyt zu verstehen. Nicht zu den elektrochemisch aktiven Bestandteilen gehört der Behälter, das Gehäuse oder die Verpackung einer galvanischen Zelle. Beispiele für unterstützende Bestandteile sind der Separator oder die Stromableiter, die häufig (und nicht immer ganz ohne Willkür) nicht zu den (elektrochemisch) aktiven Bestandteilen eines elektrochemischen Energiespeichers gezählt werden.

Im Zusammenhang mit der vorliegenden Erfindung ist unter weiteren Bestandteilen eines elektrochemischen Energiespeichers jeder im Gehäuse, im Behälter oder in der Verpackung des Energiespeichers angeordneter Bestandteil zu verstehen, der nicht zu den elektrochemisch aktiven Bestandteilen zu zählen ist. Beispiele hierfür sind insbesondere, sofern diese nicht zu den aktiven Bestandteilen gezählt werden, die Separatoren, die dazu dienen, einen Kurzschluss zwischen den Elektroden zu verhindern. Ob es sinnvoll ist, einen Separator zu den aktiven Bestandteilen zu zählen, mag beispielsweise auch davon abhängen, ob dieser Separator ein Material enthält, welches durch eine (elektro-)chemische Reaktion beeinflusst wird oder bzw. und eine solche Reaktion beeinflusst.

Im Zusammenhang mit der vorliegenden Erfindung ist unter einer chemischen Reaktion (wenigstens eines Teils) der (elektrochemisch) aktiven Bestandteile eines elektrochemischen Energiespeichers jede chemische Reaktion zu verstehen, an der die elektrochemisch aktiven Bestandteile eines elektrochemischen Energiespeichers als Reaktionsteilnehmer teilnehmen können. Hierzu gehört also insbesondere die sogenannte Zellenreaktion und auch diejenigen (elektrochemischen) Reaktionen, die an den Elektroden ablaufen, und die zusammen die so genannte Zellenreaktion ergeben. Diese chemischen Reaktionen sind in den meisten Fällen mit der Umladung von Ionen verknüpft. Die mit solchen Reaktionen verbundenen Energieänderungen machen sich bei exothermen Reaktionen durch eine Wärmeabgabe und bei endothermen Reaktionen durch eine Wärmeaufnahme bemerkbar.

Unter der Hemmung einer solchen chemischen Reaktion ist jede Maßnahme zu verstehen, durch welche die Reaktionsgeschwindigkeit dieser chemischen Reaktion verkleinert wird, oder durch welche der Gleichgewichtspunkt dieser chemischen Reaktion so verschoben wird, dass die Reaktion ganz oder näherungsweise zum Stillstand kommt. Weitere Beispiele für eine Hemmung einer chemischen Reaktion sind der Entzug von Ausgangsstoffen dieser Reaktion oder die Abschirmung eines Ausgangsstoffes dieser chemischen Reaktion von anderen Reaktionsteilnehmern, beispielsweise durch einen chemisch inerten Überzug über einer Elektrode.

Im Zusammenhang mit der vorliegenden Erfindung ist unter einem Überdruck ein Druck zu verstehen, der größer ist als der Druck außerhalb des Behälters des elektrochemischen Energiespeichers, soweit dieser erhöhte Druck einen möglicherweise erwünschten, konstruktiv bedingten erhöhten Druck im Inneren der Zelle übersteigt.

Vorteilhafte Weiterbildungen und bevorzugte Ausführungsbeispiele der Erfindung bilden den Gegenstand von Unteransprüchen.

Vorzugsweise umfassen die elektrochemisch aktiven oder anderen Bestandteile dieses elektrochemischen Energiespeichers einen beweglichen Bestandteil, dessen Fluss in das Gebiet einer chemischen Reaktion, an der dieser bewegliche Bestandteil als Edukt beteiligt ist, wenigstens lokal behindert oder unterdrückt wird, sobald sich im Innern des Behälters als Folge dieser chemischen Reaktion ein Überdruck aufbaut oder aufbauen könnte. Durch diese Maßnahme wird erreicht, dass das für den weiteren Ablauf der chemischen Reaktion benötigte Edukt, welches durch die chemische Reaktion verbraucht wird, nicht in das Reaktionsgebiet nachfließen kann, wodurch die chemische Reaktion besonders wirkungsvoll gehemmt oder sogar unterbunden wird.

Im Zusammenhang mit der vorliegenden Erfindung ist unter einem beweglichen Bestandteil eines elektrochemischen Energiespeichers ein Bestandteil dieses elektrochemischen Energiespeichers zu verstehen, der seiner Natur nach zu einem Stofftransport, also insbesondere zu einer Strömung oder zu einer Diffusion fähig ist. Wichtige Beispiele für solche beweglichen Bestandteile sind Fluide, also insbesondere Gele, Flüssigkeiten oder Gase. Ein besonders wichtiges Beispiel für einen beweglichen Bestandteil eines elektrochemischen Energiespeichers stellt der Elektrolyt dar, aber auch jeder mögliche einzelne chemische Bestandteil eines solchen Elektrolyts, wie beispielsweise Ionen oder an ein Lösungsmittel gebundene Ionen oder ein Lösungsmittel, oder Mischungen solcher Bestandteile.

Im Zusammenhang mit der vorliegenden Erfindung ist unter dem Fluss eines beweglichen Bestandteils eines elektrochemischen Energiespeichers jede Art von Materialtransport eines Materials eines beweglichen Bestandteils des elektrochemischen Energiespeichers zu verstehen, also insbesondere ein Transport durch Strömung oder ein Transport durch Diffusion. Dabei kann es sich um mechanisch induzierte oder thermisch induzierte Strömungen handeln. Auch die Diffusion kann man selbstverständlich als mikroskopische Strömung ansehen, mit der ein so genannter Diffusionsstrom verbunden ist. Dieser kann durch einen Konzentrationsgradienten oder durch andere thermodynamische Kräfte wie beispielsweise Potentialdifferenzen verursacht sein.

Im Zusammenhang mit der vorliegenden Erfindung ist unter dem Gebiet einer chemischen Reaktion in einem elektrochemischen Energiespeicher ein räumliches, nicht notwendig zusammenhängendes Gebiet innerhalb des elektrochemischen Energiespeichers zu verstehen, innerhalb dessen diese chemische Reaktion abläuft und außerhalb dessen diese chemische Reaktion praktisch nicht oder nur in einem vernachlässigbaren oder in einem konstruktiv bedingt erwünschten Umfang abläuft. Im Falle grundsätzlich erwünschter chemischer Reaktionen, bei denen lediglich das Überschreiten einer bestimmten Reaktionsgeschwindigkeit oder eines bestimmten Ausmaßes der Reaktion nicht erwünscht ist, ist unter dem Gebiet dieser chemischen Reaktion ein räumlicher Bereich innerhalb des Energiespeichers zu verstehen, innerhalb dessen diese chemische Reaktion in unerwünschter Weise abläuft und außerhalb dessen die chemische Reaktion nicht in unerwünschter Weise sondern allenfalls in erwünschter Weise abläuft.

Im Zusammenhang mit der vorliegenden Erfindung ist unter der (wenigsten lokalen) Behinderung oder Unterdrückung des Flusses eines beweglichen Bestandteils eines elektrochemischen Energiespeichers jede Maßnahme oder jeder Vorgang zu verstehen, durch den der Fluss dieses beweglichen Bestandteils wenigstens lokal, also örtlich eingeschränkt oder begrenzt, behindert oder unterdrückt wird. Beispiele für solche Maßnahmen sind das Verschließen, auch das teilweise Verschließen, von Strömungs- oder Diffusionskanälen oder auch Änderungen des Aggregatzustands oder der Fließfähigkeit eines beweglichen Bestandteils, soweit diese Änderungen zur Behinderung oder Unterdrückung des Flusses dieses beweglichen Bestandteils geeignet sind.

Als Edukt wird in der Chemie ein Stoff oder eine Substanz bezeichnet die Ausgangsstoff einer chemischen Reaktion ist oder sein kann. Solche Stoffe oder Substanzen werden auch als Reaktanten, Reaktanden oder einfach als Ausgangsstoffe bezeichnet.

Ein weiteres bevorzugtes Ausführungsbeispiel der Erfindung sieht einen elektrochemischen Energiespeicher vor, bei dem bereits eine wenigstens lokale, mit einer Über- oder Unterschreitung einer Temperaturschwelle im Innern des Behälters einhergehende Veränderung der Temperatur die Behinderung oder Unterdrückung dieser chemischen Reaktion bewirkt. Hierbei ergibt sich als Vorteil, dass insbesondere bei exothermen chemischen Reaktionen eine Temperaturveränderung häufig schneller eintritt als eine, beispielsweise durch eine Ausgasung eines Reaktionsproduktes bewirkte Drucksteigerung, wodurch die erfindungsgemäße Behinderung oder Unterdrückung dieser chemischen Reaktion schneller bewirkt werden kann.

Ein Beispiel hierfür können solche Reaktionen darstellen, bei denen ein gasförmiges Reaktionsprodukt gebildet wird oder bei denen ein zunächst flüssiges Reaktionsprodukt gebildet wird, das unter dem Einfluss der mit einer exothermen Reaktion bei zu geringer Kühlung verbundenen Temperaturerhöhung in die Gasphase übergeht. In solchen Fällen wird häufig zunächst eine Temperaturerhöhung auftreten, die erst im weiteren zeitlichen Verlauf zu einer vermehrten Bildung oder zu einer vermehrten thermischen Ausdehnung gasförmiger Reaktionsprodukte führen wird.

Ein besonders bevorzugtes Ausführungsbeispiel der Erfindung sieht daher vor, der Entstehung oder der thermischen Ausdehnung gasförmiger Reaktionsprodukte, insbesondere exothermer chemischer Reaktionen, durch eine wirksame Kühlung des Inneren des elektrochemischen Energiespeichers entgegenzuwirken. Eine derartige Kühlung kann auf unterschiedliche Weisen realisiert werden, deren zweckmäßige Auswahl von den übrigen Umständen der Konstruktion des elektrochemischen Energiespeichers und seiner Anwendungsumgebung abhängt.

Erfindungsgemäß ist vorgesehen, dass die Behinderung oder Unterdrückung dieser chemischen Reaktion wenigstens teilweise reversibel ist. Hierdurch kann erreicht werden, dass die erfindungsgemäße Behinderung oder Unterdrückung dieser chemischen Reaktion nicht endgültig zum Abschalten der betroffenen Teile des elektrochemischen Energiespeichers führen muss, sondern dass unter geeigneten Umständen eine begrenzte Reduktion der Leistung des elektrochemischen Energiespeichers an die Stelle eines endgültigen Abschaltens treten kann, die unter weiteren geeigneten Umständen nicht nur quantitativ sondern auch noch zeitlich begrenzt sein kann.

Ein weiteres bevorzugtes Ausführungsbeispiel der Erfindung sieht vor, dass die Hemmung der chemischen Reaktion durch eine vorzugsweise inerte oder sich inertisierende, also sich in eine inerte Beschichtung chemisch umwandelnde Beschichtung der Elektroden bewirkt wird, welche vorzugsweise durch diese chemische Reaktion wenigstens lokal chemisch verändert, vorzugsweise inertisiert wird.

Ein weiteres bevorzugtes Ausführungsbeispiel der Erfindung sieht vor, dass die Hemmung der chemischen Reaktion durch eine die Elektroden trennende Separatorschicht bewirkt wird, die so ausgestaltet ist, dass ein Fluss wenigstens eines Eduktes dieser chemischen Reaktion entlang dieser Schicht wenigstens lokal behindert oder unterdrückt wird, sobald sich im Innern des Behälters als Folge dieser chemischen Reaktion ein Überdruck aufbaut oder aufbauen könnte.

Erfindungsgemäß ist vorgesehen, dass die Hemmung der chemischen Reaktion durch eine die Elektroden trennende Separatorschicht aus einem porösen anorganischen Material bewirkt wird.

Ein weiteres bevorzugtes Ausführungsbeispiel der Erfindung sieht vor, dass die Hemmung der chemischen Reaktion durch eine die Elektroden trennende Separatorschicht aus einem porösen anorganischen Material bewirkt wird, welches Partikel aufweist, die beim Erreichen oder Überschreiten einer Temperaturschwelle schmelzen und die Poren der Separatorschicht wenigstens lokal verkleinern oder schließen.

Ein weiteres bevorzugtes Ausführungsbeispiel der Erfindung sieht vor, dass die Partikel aus einem Material bestehen, das aus einer Gruppe von Materialien ausgewählt ist, die Polymere oder Mischungen von Polymeren, Wachse und Mischungen dieser Materialien umfasst.

Ein weiteres bevorzugtes Ausführungsbeispiel der Erfindung sieht vor, dass die Separatorschicht derart ausgestaltet ist, dass sich ihre Poren aufgrund einer Kapillarwirkung mit dem beweglichen Bestandteil füllen, der als Edukt an der chemischen Reaktion beteiligt ist, so dass sich außerhalb der Poren der Separatorschicht nur ein relativ geringer Teil der im Energiespeicher vorhandenen Gesamtmenge des beweglichen Bestandteils befindet.

Im Folgenden wir die Erfindung anhand bevorzugter Ausführungsbeispiele und mit Hilfe der Figuren näher beschrieben. Dabei zeigen:
- Fig. 1: eine Anordnung von zwei Elektroden und einem Separator mit durch Pfeilen angedeuteten Stofftransporten gemäß eines Ausführungsbeispiels der vorliegenden Erfindung;
- Fig. 2: eine Anordnung von zwei Elektroden und einem Separator mit durch Pfeilen angedeuteten Stofftransporten gemäß eines zweiten Ausführungsbeispiels der vorliegenden Erfindung; und
- Fig. 3: eine Anordnung von zwei Elektroden und einem Separator mit durch Pfeilen angedeuteten Stofftransporten gemäß eines dritten Ausführungsbeispiels der vorliegenden Erfindung.

Die Erfindung sieht einen elektrochemischen Energiespeicher mit elektrochemisch aktiven Bestandteilen 11, 13, 21, 23, 31, 33 vor, die im Inneren eines Behälters angeordnet sind. Diese elektrochemisch aktiven Bestandteile oder weitere in dem Behälter angeordnete Bestandteile 12, 22, 32 sind derart ausgestaltet oder angeordnet, dass sie den Ablauf wenigstens einer chemischen Reaktion wenigstens eines Teils der elektrochemisch aktiven Bestanteile des Energiespeichers hemmen, sobald sich im Inneren des Behälters als Folge dieser chemischen Reaktion ein Überdruck aufbaut oder aufbauen könnte.

Eine erwünschte Folge dieser Ausgestaltung des erfindungsgemäßen elektrochemischen Energiespeichers ist, dass der Behälter dieses elektrochemischen Energiespeichers hermetisch abgedichtet werden oder ausgestaltet sein kann, und das insbesondere auf Sicherheitseinrichtungen wie z.B. Überdruckventile, Sollbruchstellen oder Berstscheiben im Behälter, im Gehäuse oder in der Verpackung dieses elektrochemischen Energiespeichers verzichtet werden kann. Hiermit sind wichtige konstruktive Vorteile verbunden, die zum einen in der Vereinfachung der Herstellung des Energiespeichers liegen, die zum anderen aber auch dessen Sicherheit bei der Anwendung betreffend wirkt.

Eine Drucksteigerung im Innern des Behälters eines elektrochemischen Energiespeichers ist vor allem dann zu erwarten, wenn in diesem Behälter eine chemische Reaktion abläuft, zu deren Reaktionsprodukten gasförmige Stoffe gehören oder Flüssigkeiten, die sich bei Wärmeentwicklung stark ausdehnen. Gemäß einer bevorzugten Ausführungsform der vorliegenden Erfindung wird dies dadurch erreicht, dass ein Edukt (Ausgangsstoff) dieser chemischen Reaktion, welche zum Aufbau eines Überdrucks führen könnte, daran gehindert wird, in das Gebiet der chemischen Reaktion nachzufließen. In vielen Fällen genügt dabei schon, wenn der Fluss dieses Eduktes wenigstens lokal behindert oder vollständig unterdrückt wird, sobald sich im Innern des Behälters als Folge dieser chemischen Reaktion ein Überdruck aufbaut oder aufbauen könnte.

Ein wichtiges Beispiel für ein solches Edukt, dessen Fluss in das Gebiet einer chemischen Reaktion wenigstens lokal behindert oder unterdrückt werden könnte, ist der Elektrolyt, der in vielen galvanischen Zelltypen in flüssiger Form vorliegt. Da die chemische Reaktion die zum Überdruckaufbau führen könnte den Ausgangsstoff verbraucht, ist dessen Nachlieferung insbesondere durch Zufluss in das Reaktionsgebiet eine notwendige Vorraussetzung für den Fortbestand der chemischen Reaktion. Die Behinderung oder Unterdrückung des weiteren Zuflusses oder der weiteren Nachlieferung dieses Ausgangsstoffes in das Reaktionsgebiet ist daher eine geeignete Maßnahme, um den Ablauf der chemischen Reaktion oder deren unerwünschten Umfang oder deren unerwünschte Geschwindigkeit wenigstens örtlich begrenzt zu hemmen und so die unerwünschte Drucksteigerung im Inneren des Behälters abzuwenden oder aufzuhalten.

In vielen Fällen werden chemische Reaktionen mit einer Temperaturerhöhung im Inneren des elektrochemischen Energiespeichers verbunden sein, noch bevor sich der Druck im Innern des Behälters merklich erhöht. Dies wird beispielsweise dann der Fall sein, wenn eine unerwünschte chemische Reaktion oder eine erwünschte chemische Reaktion in unerwünschtem Ausmaß örtlich stark lokalisiert abläuft, sodass es zunächst nur zu einer lokalen Temperaturerhöhung kommt, welche häufig zunächst nur mit geringen Ausgasungen oder Verdampfungen verbunden ist, welche aber mit fortschreitender Ausbreitung der Temperaturerhöhung beispielsweise durch Wärmeleitung zu einer Ausweitung der Ausgasung oder Verdampfung und damit möglicherweise zu einer erheblichen Druckzunahme erst mit spürbarer Verspätung führen kann.

In solchen Fällen ist eine weitere Ausführungsform der Erfindung besonders vorteilhaft, bei der bereits eine wenigstens lokale Veränderung der Temperatur, die mit einer Über- oder Unterschreitung einer Temperaturschwelle im Inneren des Behälters einhergeht, die Behinderung oder Unterdrückung dieser chemischen Reaktion bewirkt. Auf diese Weise kann eine Drucksteigerung bereits im Vorfeld verhindert werden. Solche Ausführungsbeispiele der Erfindung können vorteilhaft beispielsweise dadurch realisiert werden, dass ein Reaktionsteilnehmer oder ein Katalysator der chemischen Reaktion, welche die Temperaturerhöhung bewirkt, von der festen in die flüssige oder in die gasförmige Phase übergeht, wodurch sich die geometrische Anordnung der Reaktionspartner im elektrochemischen Energiespeicher so verändern kann, dass die chemische Reaktion, welche die Temperaturerhöhung bewirkt, unterdrückt oder wenigstens behindert wird. Eine andere Möglichkeit zur Realisierung dieses Ausführungsbeispiels besteht darin, die Poren einer porösen Struktur durch das Schmelzen einer Substanz zu verstopfen oder zu verkleinern wodurch der Fluss eines Edukts der chemischen Reaktion behindert oder unterdrückt wird.

Erfindungsgemäß ist es mit besonderen Vorteilen verbunden, wenn die Behinderung oder die Unterdrückung dieser chemischen Reaktion wenigstens teilweise reversibel ist. Ist dies nämlich der Fall, dann können die Leistungsminderungen, die mit der Unterdrückung oder Behinderung der chemischen Reaktion in vielen Fällen einhergehen, bei Wegfall der Gefährdung des elektrochemischen Energiespeichers wenigstens teilweise wieder rückgängig gemacht werden.

Ein Beispiel für solch einen Mechanismus stellt eine Reaktion dar, welche unter Wärmeentwicklung einen gasförmigen Stoff produziert oder einen zuvor nicht gasförmigen Stoff in die Gasphase überführt, der so zu einer Druckerhöhung führt, der jedoch nach Abfuhr der Reaktionswärme wieder in den flüssigen Zustand übergeht. Wird der Energiespeicher so ausgestaltet, dass der gasförmige Stoff aus dem Reaktionsgebiet entweicht und somit der Reaktion ein Edukt entzieht oder verdängt oder dessen Verfügbarkeit auf andere Weise vermindert, so wird die Reaktion als Folge des Entweichens des gasförmigen Reaktionsteilnehmers oder der verringerten Verfügbarkeit eines Eduktes zum Stillstand kommen. In der Folge wird die Wärmeentwicklung nachlassen und die Zelle wird abkühlen, insbesondere dann, wenn sie durch zusätzliche Maßnahmen gekühlt wird. In der Folge kann der gasförmige Reaktionspartner wieder in die flüssige Phase kondensieren, in das Reaktionsgebiet zurück fließen, und die Zelle kann ihren normalen Betrieb wieder aufnehmen.

Eine weitere bevorzugte Ausführungsform der vorliegenden Erfindung sieht vor, die Hemmung der chemischen Reaktion durch eine Beschichtung der Elektroden zu bewirken, die durch die chemische Reaktion wenigstens lokal chemisch verändert wird. So ist es beispielsweise möglich, eine Elektrode, vorzugsweise die Katode, mit einem keramischen Separator wie beispielsweise Separion zu beschichten wodurch eine Hemmung der chemischen Reaktion bewirkt werden kann. Andere mögliche Beschichtungen der Elektroden sind passivierende Beschichtungen beispielsweise aus Oxiden der in den Elektroden verwendeten Metalle.

Eine weitere bevorzugte Ausführungsform der vorliegenden Erfindung sieht vor, dass die Hemmung der chemischen Reaktion durch eine die Elektroden trennende Separatorschicht bewirkt wird, die so ausgestaltet ist, dass ein Fluss wenigstens eines Eduktes dieser chemischen Reaktion entlang dieser Schicht wenigstens lokal behindert oder unterdrückt wird, so bald sich im Innern des Behälters als Folge dieser chemischen Reaktion ein Überdruck aufbaut oder aufbauen könnte. Dieses Ausführungsbeispiel der Erfindung umfasst auch Ausführungsformen, bei denen ein Fluss dieses Eduktes der chemischen Reaktion entlang dieser Separatorschicht ständig behindert oder unterdrückt wird, beispielsweise weil die Separatorschicht senkrecht zur Schicht orientierte Kanäle aufweist, in denen dieses Edukt frei beweglich ist, wobei das Edukt jedoch zwischen den verschiednen Kanälen nicht frei beweglich ist.

Vorzugsweise weist wenigstens eine Elektrode des elektrochemischen Energiespeichers, besonders bevorzugt wenigstens eine Kathode, eine Verbindung mit der Formel LiMP04 auf, wobei M wenigstens ein Übergangsmetallkation der ersten Reihe des Periodensystems der Elemente ist. Das Übergangsmetallkation ist vorzugsweise aus der Gruppe bestehend aus Mn, Fe, Ni und Ti oder einer Kombination dieser Elemente gewählt. Die Verbindung weist vorzugsweise eine Olivinstruktur auf, vorzugsweise übergeordnetes Olivin.

In einer weiteren Ausführungsform weist vorzugsweise wenigstens eine Elektrode des elektrochemischen Energiespeichers, besonders bevorzugt wenigstens eine Kathode, ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, auf.

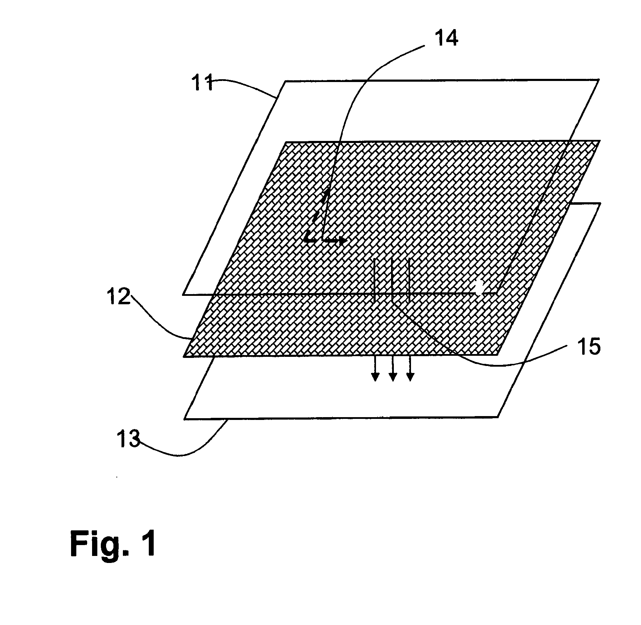

Figur 1 zeigt in schematischer Weise eine Ausführungsform der Erfindung, bei dem zwei Elektroden 11 und 13 durch eine Separatorschicht 12 getrennt sind, die zwar einen Stofftransport 15 in senkrechter Richtung zur Separatorschicht ermöglicht, welche jedoch einen Stofftransport 14 tangential zur Separatorschicht behindert oder unterdrückt, was in dieser Figur durch gestrichelte Pfeile 14 angedeutet ist.

Solche Separatormaterialien können beispielsweise auch aus porösen anorganischen Materialien bestehen die so beschaffen sind, dass ein Stofftransport durch den Separator senkrecht zur Separatorschicht erfolgen kann wogegen ein Stofftransport parallel zur Separatorschicht behindert oder sogar unterdrückt wird.

Besonders bevorzugt sind dabei Separatormaterialien die aus einem porösen anorganischen Material bestehen, dass mit Partikeln durchsetzt ist oder solche Partikel wenigstens an seiner Oberfläche aufweist, die beim Erreichen oder Überschreiten einer Temperaturschwelle schmelzen und die Poren der Separatorschicht wenigstens lokal verkleinern oder verschließen. Solche Partikel können vorzugsweise aus einem Material bestehen, dass aus einer Gruppe von Materialien ausgewählt ist, die Polymere oder Mischungen von Polymeren, Wachse oder Mischungen dieser Materialien umfasst.

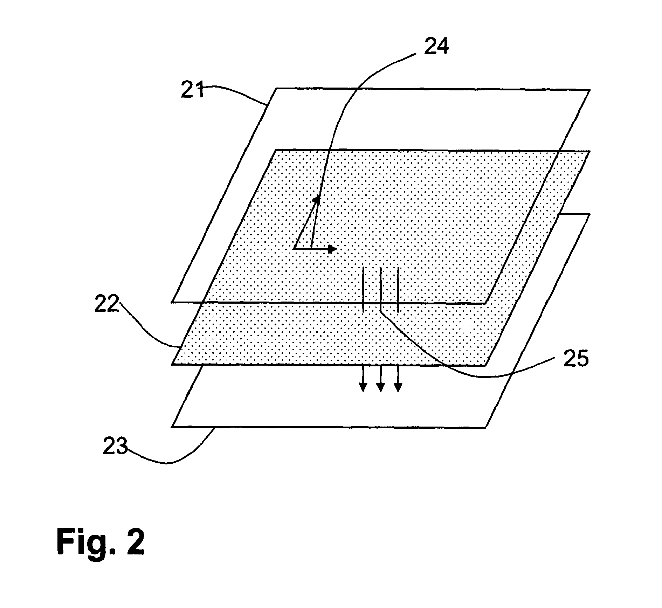

Figur 2 zeigt in schematischer Weise eine Ausführungsform der Erfindung, bei dem zwei Elektroden 21 und 23 durch eine Separatorschicht 22 getrennt sind, die einen Stofftransport 25 in senkrechter Richtung zur Separatorschicht ermöglicht, und die einen Stofftransport 24 tangential zur Separatorschicht 22 ermöglicht, weil die oberhalb einer Temperaturschwelle schmelzenden Partikel des Separators 22 noch nicht geschmolzen sind.

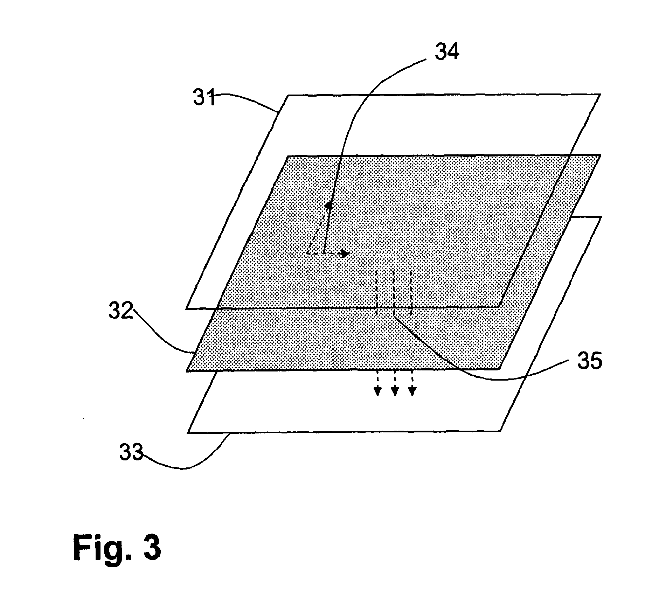

Figur 3 zeigt in schematischer Weise eine Ausführungsform der Erfindung, bei dem zwei Elektroden 31 und 33 durch eine Separatorschicht 32 getrennt sind, die einen Stofftransport 15 in senkrechter Richtung zur Separatorschicht und einen Stofftransport 14 tangential zur Separatorschicht 32 behindert oder unterdrückt, was in dieser Figur durch gestrichelte Pfeile 14 angedeutet ist, weil die oberhalb einer Temperaturschwelle schmelzenden Partikel des Separators 22 bereits geschmolzen sind.

Besonders bevorzugt ist eine Ausführungsform der Erfindung, bei der die Separatorschicht derart ausgestaltet ist, dass sich ihre Poren aufgrund einer Kapillarwirkung mit dem beweglichen Bestandteil füllen, der als Edukt an der chemischen Reaktion beteiligt ist, sodass sich außerhalb der Poren der Separatorschicht nur ein relativ geringer Teil der im Energiespeicher vorhandenen Gesamtmenge des beweglichen Bestandteils befindet. In diesem Zusammenhang ist der Elektrolyt oder einer seiner chemischen Bestandteile oder eine Mischung solcher Bestandteile ein besonders bevorzugtes Edukt, der gemäß einem besonders bevorzugten Ausführungsbeispiel der Erfindung möglichst die gesamte poröse Separatorschicht benetzt oder durchtränkt, der jedoch außerhalb der Separatorschicht nicht oder nur in vernachlässigbarer oder verhältnismäßig geringer Menge anzutreffen ist. Eine solche Anordnung kann bei der Herstellung des elektrochemischen Energiespeichers dadurch erhalten werden, dass der posöse Separator mit dem Elektrolyten oder einem anderen Edukt einer geeignet gewählten chemischen Reaktion getränkt wird, sodass dieses Edukt sich anschließend weitgehend nur in dem Separator befindet.

Kommt es nun aufgrund einer chemischen Reaktion zu einer möglicherweise zunächst nur lokalen Drucksteigerung durch Bildung einer Gasblase oder durch eine lokale Erwärmung, dann kann dieses Edukt nicht aus anderen Bereichen in das Reaktionsgebiet nachfließen. Soweit oder solange es noch nachfließen kann, wird die Verfügbarkeit dieses Eduktes an anderen Stellen entsprechend vermindert. Die Reaktion kommt schließlich zum Stillstand oder bleibt wenigstens auf ein vorzugsweise kleines Gebiet begrenzt.

Erfindungsgemäß wird vorzugsweise ein Separator verwendet, welcher nicht oder nur schlecht elektronenleitend ist, und welcher aus einem zumindest teilweise stoffdurchlässigen Träger besteht. Der Träger ist vorzugsweise auf mindestens einer Seite mit einem anorganischen Material beschichtet. Als wenigstens teilweise stoffdurchlässiger Träger wird vorzugsweise ein organisches Material verwendet, welches vorzugsweise als nicht verwebtes Vlies ausgestaltet ist. Das organische Material, welches vorzugsweise ein Polymer und besonders bevorzugt ein Polyethylenterephthalat (PET) umfasst, ist mit einem anorganischen, vorzugsweise ionenleitenden Material beschichtet, welches weiter vorzugsweise in einem Temperaturbereich von -40° C bis 200° C ionenleitend ist. Das anorganische Material umfasst bevorzugt wenigstens eine Verbindung aus der Gruppe der Oxide, Phosphate, Sulfate, Titanate, Silikate, Aluminosilikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf.

Ein solcher Separator wird beispielsweise unter dem Handelsnamen "Separion" von der Evonik AG in Deutschland vertrieben.

## Patentansprüche

1. Elektrochemischer Energiespeicher mit elektrochemisch aktiven Bestandteilen (11, 13; 21, 23; 31, 33), die im Inneren eines Behälters angeordnet sind, wobei
diese elektrochemisch aktiven Bestandteile (11, 13; 21, 23; 31, 33) oder weitere in dem Behälter angeordnete Bestandteile (12; 22; 32) derart ausgestaltet oder angeordnet sind, dass sie den Ablauf wenigstens einer chemischen Reaktion wenigstens eines Teils der elektrochemisch aktiven Bestandteile des Energiespeichers hemmen, sobald sich im Inneren des Behälters als Folge dieser chemischen Reaktion ein Überdruck aufbaut oder aufbauen könnte und wobei die Hemmung der chemischen Reaktion durch eine die Elektroden trennende Separatorschicht aus einem porösen anorganischen Material bewirkt wird, **dadurch gekennzeichnet, dass** die Behinderung oder Unterdrückung der chemischen Reaktion wenigstens teilweise reversibel ist.

2. Elektrochemischer Energiespeicher nach Anspruch 1,
**dadurch gekennzeichnet, dass**
die Hemmung der chemischen Reaktion durch eine Beschichtung der Elektroden bewirkt wird, welche durch die chemische Reaktion wenigstens lokal chemisch verändert wird.

3. Elektrochemischer Energiespeicher nach einem der vorhergehenden Ansprüche,
**dadurch gekennzeichnet, dass**
die Hemmung der chemischen Reaktion durch eine die Elektroden trennende Separatorschicht aus einem porösen anorganischen Material bewirkt wird, welches Partikel aufweist, die beim Erreichen oder Überschreiten einer Temperaturschwelle schmelzen und die Poren der Separatorschicht wenigstens lokal verkleinern oder schließen.

4. Elektrochemischer Energiespeicher nach Anspruch 3,
**dadurch gekennzeichnet, dass**
die Partikel der Separatorschicht aus einem Material bestehen, das aus einer Gruppe von Materialien ausgewählt ist, die Polymere oder Mischungen von Polymeren, Wachse und Mischungen dieser Materialien umfasst.

5. Elektrochemischer Energiespeicher nach einem der vorhergehenden Ansprüche,
**dadurch gekennzeichnet, dass**
er wenigstens eine Elektrode aufweist, vorzugsweise wenigstens eine Kathode, welche eine Verbindung mit der Formel LiMPO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist.

6. Elektrochemischer Energiespeicher nach einem der vorhergehenden Ansprüche,
**dadurch gekennzeichnet, dass**
er wenigstens eine Elektrode aufweist, vorzugsweise wenigstens eine Kathode, welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

7. Elektrochemischer Energiespeicher nach einem der vorhergehenden Ansprüche,
**dadurch gekennzeichnet, dass**
er wenigstens einen Separator aufweist, welcher nicht oder nur schlecht elektronenleitend ist und welcher aus einem zumindest teilweise stoffdurchlässigen Träger besteht, wobei der Träger vorzugsweise auf mindestens einer Seite mit einem anorganischen Material beschichtet ist, wobei als wenigstens teilweise stoffdurchlässiger Träger vorzugsweise ein organisches Material verwendet wird, welches vorzugsweise als nicht verwebtes Vlies ausgestaltet ist, wobei das organische Material vorzugsweise ein Polymer und besonders bevorzugt ein Polyethylenterephthalat (PET) umfasst, wobei das organische Material mit einem anorganischen, vorzugsweise ionenleitenden Material beschichtet ist, welches weiter vorzugsweise in einem Temperaturbereich von -40° C bis 200 °C ionenleitend ist, wobei das anorganische Material bevorzugt wenigstens eine Verbindung aus der Gruppe der Oxide, Phosphate, Sulfate, Titanate, Silikate, Aluminosilikate wenigstens eines der Elemente Zr, Al, Li umfasst, besonders bevorzugt Zirkonoxid, und wobei das anorganische, ionenleitende Material bevorzugt Partikel mit einem größten Durchmesser unter 100 nm aufweist.

8. Verfahren zur Herstellung eines elektrochemischen Energiespeichers mit elektrochemisch aktiven Bestandteilen (11, 13; 21, 23; 31, 33), die im Inneren eines Behälters angeordnet sind, wobei
diese elektrochemisch aktiven Bestandteile (11, 13; 21, 23; 31, 33) oder weitere in dem Behälter anzuordnende Bestandteile (12; 22; 32) derart ausgestaltet oder angeordnet werden, dass sie den Ablauf wenigstens einer chemischen Reaktion wenigstens eines Teils der elektrochemisch aktiven Bestandteile des Energiespeichers hemmen, sobald sich im Inneren des Behälters als Folge dieser chemischen Reaktion ein Überdruck aufbaut oder aufbauen könnte, und wobei die Hemmung der chemischen Reaktion durch eine die Elektroden trennende Separatorschicht aus einem porösen anorganischen Material bewirkt wird, **dadurch gekennzeichnet, dass** die Behinderung oder Unterdrückung der chemischen Reaktion wenigstens teilweise reversibel ist.

## Claims

1. An electrochemical energy storage device having electrochemically active components (11, 13; 21, 23; 31, 33) arranged within the interior of a container, wherein
said electrochemically active components (11, 13; 21, 23; 31, 33) or additional components (12; 22; 32) arranged in said container are designed or arranged such that they inhibit the process of at least one chemical reaction of at least part of the electrochemically active components of the energy storage device as soon as excess pressure builds, or could build, within the interior of the container as a result of said chemical reaction, and wherein the inhibition of the chemical reaction is effected by a separator layer made of a porous inorganic material which separates the electrodes, **characterized in that** the inhibition or suppression of the chemical reaction is at least partially reversible.

2. The electrochemical energy storage device according to claim 1,
**characterized in that**
the inhibition of the chemical reaction is effected by an electrode coating which is at least locally chemically changed by the chemical reaction.

3. The electrochemical energy storage device according to one of the preceding claims,
**characterized in that**
the inhibition of the chemical reaction is effected by a separator layer made of a porous inorganic material which separates the electrodes, said material comprising particles which melt upon reaching or exceeding a temperature threshold and at least locally shrink or close the pores of the separator layer.

4. The electrochemical energy storage device according to claim 3,
**characterized in that**
the particles of the separator layer consist of a material which is selected from among a group of materials comprising polymers or polymer mixtures, waxes or mixtures of these materials.

5. The electrochemical energy storage device according to any one of the preceding claims,
**characterized in that**
same comprises at least one electrode, preferably at least one cathode, which comprises a compound of the formula LiMPO₄, wherein M is at least one transition metal cation from the first row of the periodic table of the elements, wherein said transition metal cation is preferably selected from among the group consisting of Mn, Fe, Ni and Ti, or a combination of these elements, and wherein said compound preferably has an olivine structure, preferably higher-order olivine, wherein Fe is particularly preferred.

6. The electrochemical energy storage device according to any one of the preceding claims,
**characterized in that**
same comprises at least one electrode, preferably at least one cathode, which comprises a lithium manganate, preferably LiMn₂O₄ of the spinel type, a lithium cobaltate, preferably LiCoO₂, or a lithium nickelate, preferably LiNiO₂, or a mixture of two or three of these oxides, or a lithium mixed oxide containing manganese, cobalt and nickel.

7. The electrochemical energy storage device according to any one of the preceding claims,
**characterized in that**
same comprises at least one separator which does not or only poorly conducts electrons and which consists of an at least partially material-permeable substrate, wherein said substrate is preferably coated on at least one side with an inorganic material, wherein an organic material, preferably implemented as a non-woven material, is preferably used as an at least partially material-permeable substrate, wherein the organic material preferably comprises a polymer and particularly preferably a polyethylene terephthalate (PET), wherein said organic material is coated with an inorganic, preferably ion-conducting material which is further preferably ion-conductive in a temperature range of -40°C to 200°C, wherein said inorganic material preferably comprises at least one compound from among the group of oxides, phosphates, sulfates, titanates, silicates, aluminosilicates of at least one of the elements Zr, Al, Li, particularly preferably zirconium oxide, and wherein said inorganic, ion-conducting material preferably comprises particles having a maximum diameter of less than 100 nm.

8. A method for producing an electrochemical energy storage device having electrochemically active components (11, 13; 21, 23; 31, 33) arranged within the interior of a container, wherein
said electrochemically active components (11, 13; 21, 23; 31, 33) or additional components (12; 22; 32) arranged in said container are designed or arranged such that they inhibit the process of at least one chemical reaction of at least part of the electrochemically active components of the energy storage device as soon as excess pressure builds, or could build, within the interior of the container as a result of said chemical reaction, and wherein the inhibition of the chemical reaction is effected by a separator layer made of a porous inorganic material which separates the electrodes, **characterized in that** the inhibition or suppression of the chemical reaction is at least partially reversible.

## Revendications

1. Batterie électrochimique avec des composants électrochimiquement actifs (11, 13 ; 21, 23 ; 31, 33) qui sont disposés à l'intérieur d'une cuve, ces composants électrochimiquement actifs (11, 13 ; 21, 23 ; 31, 33) ou d'autres composants (12 ; 22 ; 32) disposés dans la cuve étant conçus ou disposés de façon à bloquer le déroulement d'au moins une réaction chimique d'au moins une partie des composants électrochimiquement actifs de la batterie dès qu'une surpression se produit ou est susceptible de se produire à l'intérieur de la cuve par suite de cette réaction chimique et la réaction chimique étant bloquée par une couche de séparation séparant les électrodes et faite d'un matériau anorganique poreux, **caractérisée en ce que** le blocage ou la suppression de la réaction chimique est au moins en partie réversible.

2. Batterie électrochimique selon la revendication 1, **caractérisée en ce que**
la réaction chimique est bloquée par un revêtement des électrodes, lequel est modifié chimiquement au moins localement par la réaction chimique.

3. Batterie électrochimique selon l'une quelconque des revendications précédentes, **caractérisée en ce que**
la réaction chimique est bloquée par une couche de séparation séparant les électrodes et faite d'un matériau anorganique poreux, lequel comprend des particules qui fondent lorsqu'un seuil de température est atteint ou dépassé et rétrécissent ou bouchent au moins localement les pores de la couche de séparation.

4. Batterie électrochimique selon la revendication 3, **caractérisée en ce que**
les particules de la couche de séparation sont constituées d'un matériau qui est choisi dans un groupe de matériaux qui comporte des polymères ou des mélanges de polymères, des cires et des mélanges de ces matériaux.

5. Batterie électrochimique selon l'une quelconque des revendications précédentes, **caractérisée en ce que**
elle comprend au moins une électrode, de préférence au moins une cathode, laquelle présente un composé de formule LIMPO₄, M étant au moins un cation métallique de transition de la première rangée du système périodique des éléments, ce cation métallique de transition étant choisi de préférence dans le groupe consistant en Mn, Fe, Ni et Ti ou une combinaison de ces éléments, et le composé présentant de préférence une structure olivine, de préférence une olivine d'ordre supérieur, Fe étant particulièrement préféré.

6. Batterie électrochimique selon l'une quelconque des revendications précédentes, **caractérisée en ce que**
elle comprend au moins une électrode, de préférence au moins une cathode, laquelle comprend un manganate de lithium, de préférence LiMn₂O₄, du type spinelle, un colbaltate de lithium, de préférence LiCoO₂ ou un nickelate de lithium, de préférence LiNiO₂ ou un mélange de deux ou trois de ces oxydes, ou un oxyde mixte de lithium, lequel contient du manganèse, du cobalt et du nickel.

7. Batterie électrochimique selon l'une quelconque des revendications précédentes, **caractérisée en ce que**
elle comprend au moins un séparateur, lequel n'est pas ou est seulement mauvais conducteur d'électrons et lequel est composé d'un support au moins en partie perméable aux substances, le support étant revêtu de préférence sur au moins une face d'un matériau anorganique, un matériau organique étant utilisé de préférence comme support au moins en partie perméable aux substances et étant conçu de préférence comme un non-tissé, le matériau organique comportant de préférence un polymère et de préférence encore un polytéréphtalate d'éthylène (PET), le matériau organique étant revêtu d'un matériau anorganique, de préférence conducteur d'ions, lequel est encore plus conducteur d'ions dans une plage de températures allant de -40 °C à 200° C, le matériau anorganique comportant de préférence au moins un composé du groupe des oxydes, des phosphates, des sulfates, des titanates, des silicates, des silicates d'aluminium d'au moins un des éléments Zr, Al, Li, de préférence encore de l'oxyde de zirconium, et le matériau anorganique conducteur d'ions comprenant de préférence des particules présentant un diamètre plus important, de moins de 100 nm.

8. Procédé de fabrication d'une batterie électrochimique dont les composants électrochimiquement actifs (11, 13 ; 21, 23 ; 31, 33) sont disposés à l'intérieur d'une cuve, ces composants électrochimiquement actifs (11, 13 ; 21, 23 ; 31, 33) ou d'autres composants (12 ; 22 ; 32) disposés dans la cuve étant conçus ou disposés de façon à bloquer le déroulement d'au moins une réaction chimique d'au moins une partie des composants électrochimiquement actifs de la batterie dès qu'une surpression se produit ou est susceptible de se produire à l'intérieur de la cuve par suite de cette réaction chimique, et la réaction chimique étant bloquée par une couche de séparation séparant les électrodes et faite d'un matériau anorganique poreux, **caractérisée en ce que** le blocage ou la surpression de la réaction chimique est au moins en partie réversible.
